# EUROPÄISCHE PATENTSCHRIFT

(11) **EP 4 067 287 B1**
(45) Veröffentlichungstag und Bekanntmachung des Hinweises auf die Patenterteilung: **01.05.2024**
(21) Anmeldenummer: 22159390.8
(22) Anmeldetag: 01.03.2022
(51) Int. Cl.: B66F 9/06

(54) **VERFAHREN ZUM BETREIBEN EINES FLURFÖRDERZEUGS IN EINEM INTRALOGISTISCHEN SYSTEM UND INTRALOGISTISCHES SYSTEM**
METHOD FOR OPERATING AN INDUSTRIAL TRUCK IN AN INTRALOGISTICS SYSTEM AND INTRALOGISTICS SYSTEM
PROCÉDÉ DE FONCTIONNEMENT D'UN CHARIOT DE MANUTENTION DANS UN SYSTÈME INTRALOGISTIQUE ET SYSTÈME INTRALOGISTIQUE

(30) Priorität: 31.03.2021 DE 102021108206
(43) Veröffentlichungstag der Anmeldung: 05.10.2022
(73) Patentinhaber: STILL GmbH, 22113 Hamburg (DE); Linde Material Handling GmbH, 63743 Aschaffenburg (DE)
(72) Erfinder: KRUMBHOLZ, Peter, 63869 Jakobsthal (DE); TREBER, Florian, 63739 Aschaffenburg (DE); SCHÜTHE, Dennis, 21255 Tostedt (DE); ABEL, Bengt, 21335 Lüneburg (DE); IGNATOV, Marina, 24114 Kiel (DE)
(74) Vertreter: Patentship Patentanwaltgesellschaft

(56) Entgegenhaltungen:
- EP-A1- 3 511 884
- EP-A1- 3 772 483
- DE-A1-102014 222 486
- DE-A1-102017 209 619

## Beschreibung

Die Erfindung betrifft ein Verfahren zum Betreiben eines Flurförderzeugs in einem intralogistischen System, wobei mittels mindestens eines Sicherheitssystems eine Überwachung mindestens eines Sicherheitsbereichs in einem Umgebungsbereich des Flurförderzeugs durchgeführt wird.

Außerdem betrifft die Erfindung ein intralogistisches System, das ein oben genanntes Verfahren durchführt.

Unter einem intralogistischen System versteht man ein System, bei dem logistische Material- und Warenflüsse innerhalb eines Betriebsgeländes abgewickelt werden. Mit diesem Begriff wird eine Abgrenzung zum Warentransport außerhalb eines Werkes, z.B. durch eine Spedition, erreicht. Intralogistische Systeme umfassen insbesondere neben Regalen Geräte zur Lager- und Fördertechnik, Hebezeuge, Flurförderzeuge, Kommissioniergeräte, Palettiergeräte, Verpackungsgeräte sowie lagerhallenspezifische Einrichtungen, wie z.B. automatische Tore. Solche Geräte und Einrichtungen bilden die technischen Prozessteilnehmer des intralogistischen Systems. Außerdem gehören zu diesem intralogistischen System auch prozessteilnehmende Betriebspersonen, z.B. Bedienpersonen von Flurförderzeugen, Lagermitarbeiter und Lagerleiter.

Beim Betrieb von Flurförderzeugen in einem intralogistischen System kommen häufig Assistenzsysteme zum Einsatz, die eine Bedienung des Flurförderzeugs erleichtern sollen oder sogar einen automatisierten oder teilautomatisierten Betrieb ermöglichen sollen. Da Flurförderzeuge meistens in definierten Betriebsbereichen, z.B. in Warenlagern, eingesetzt werden, können hierfür ortsbezogene Assistenzsysteme genutzt werden. Dabei werden im Warenlager beispielsweise Zeichen, Linien und Schilder oder auch Barcodes und Funkstationen zur Übermittlung von Identifikationssignalen (Funkbeacons) angebracht. Diese Informationen sind aber nur abrufbar, wenn sie in ein Managementsystem für den Betrieb des Flurförderzeugs eingetragen werden. Das Flurförderzeug kann über einen Sensor, z.B. einen optischen Sensor, diese Informationen erfassen und mittels einer Datenverarbeitungseinrichtung mit den Eintragungen im Managementsystem vergleichen. Auf diese Weise ist eine erleichterte manuelle oder automatische Navigation des Flurförderzeugs im Warenlager möglich.

Bei manuell bedienten Flurförderzeugen können auch extern angebrachte Spiegel, beispielsweise an schlecht einsehbaren Kreuzungen, oder Einweiser-Personen zum Einsatz kommen, um ein sicheres Rangieren zu gewährleisten, wenn der Fahrzeugbediener seinen Fahrweg nicht komplett einsehen kann.

Außerdem sind stationäre Personenschutzanlagen, beispielsweise Zäune und elektrisch überwachte Türen sowie Lichtvorhänge und Lichtschranken bekannt, welche verhindern, dass Personen in den Arbeitsbereich stationär arbeitender Maschinen, insbesondere Industrieroboter, gelangen. Die Maschinen können auch beim Zutritt einer Person in den Arbeitsbereich automatisch angehalten werden. Es kann auch beispielsweise ein Regalgang an jedem Ende jeweils mit einer Lichtschranke überwacht werden, so dass das Flurförderzeug innerhalb des Regalgangs ohne eigene Personenschutzanlage fahren kann.

Überwachungseinrichtungen mit optischen Signalsendern und Signalempfängern kommen bei Flurförderzeugen in Systemen zur Kollisionsvermeidung oder zur Navigation zum Einsatz. Insbesondere bei automatisierten oder teilautomatisierten Flurförderzeugen spielen optische Sensoren eine große Rolle, damit sich das Flurförderzeug gefahrlos autonom bewegen kann oder zumindest der Fahrer mittels Assistenzsystemen unterstützt werden kann. So sind bereits autonome Flurförderzeuge im Einsatz, die sich fahrerlos durch Lagerhallen bewegen und selbsttätig Positionen zum Aufnehmen und Abgeben von Waren ansteuern. Ein Beispiel hierfür sind mobile Kommissionierroboter, die sich automatisiert durch ein Lager bewegen können und mit Hilfe eines Greifsystems, insbesondere eines Roboterarms, Objekte zum Beispiel aus einem Regal aufnehmen können.

In all diesen Fällen sind Sicherheitssysteme zur Umgebungsüberwachung, insbesondere zur Kollisionsvermeidung, erforderlich, damit ein sicherer Betrieb der Flurförderzeuge gewährleistet ist und ein unbeabsichtigtes Auffahren auf ein Hindernis oder gar eine Verletzung einer auf der Fahrbahn des Flurförderfahrzeugs befindlichen Person verhindert wird.

Die gängigen Methoden zur Umgebungsüberwachung bei Flurförderzeugen basieren auf Distanzmessung mittels Laser, Ultraschall oder Radar. Dabei wird der direkte Freiraum in Fahrtrichtung des Flurförderzeugs ermittelt. Die Umgebungsüberwachung mittels Laserscanner erfordert einen erheblichen Investitionsaufwand. Ein Laserscanner besteht aus einer Laserdiode und einem Empfänger, die sich in einem motorangetriebenen, rotierenden Kopf befinden, sowie einem hochauflösenden Inkrementalgeber zur Winkelmessung. Das auf ein Hindernis auffallende Laserlicht wird in sich selbst, also zum Sender, bzw. zu einem unmittelbar daneben montierten Empfänger reflektiert. Da es sich bei Laserscanner bzw. Lasersensoren um Präzisionsgeräte handelt sowie für die Auswertung der dreidimensionalen Messdaten ein aufwendiger Auswerterechner erforderlich ist und die exakte Kalibrierung des Laserscanners einen erheblichen apparativen Aufwand notwendig macht, ist diese Methode sehr teuer. Andererseits ist die Messgenauigkeit bei herkömmlichen, auf Distanzmessungen beruhenden, Radar- und Ultraschallmethoden nicht hoch genug, um fein darauf reagieren zu können.

Kamerabasierte Systeme werden bisher hauptsächlich zur Navigation eingesetzt. Hierzu werden üblicherweise paarweise Kameras zu Stereokamerasystemen zusammengeschaltet, die ein dreidimensionales Bild des gesamten umgebenden Raums aufnehmen. Dabei werden sehr hohe Datenmengen erzeugt, deren Verarbeitung einen erheblichen Rechenaufwand erfordert.

Autonome Flurförderzeuge können heute Ladungsträger, beispielsweise Paletten, aus Regalen entnehmen oder direkt Güter von Ladungsträgern in Regalen entnehmen. Weiterhin sind autonome Flurförderzeuge bekannt, die mittels Manipulatoren Güter aus Fachbodenregalen oder anderen Regalformen, beispielsweise Durchlaufregalen, entnehmen. In den meisten Fällen werden die Ladungsträger oder Güter dort durch andere autonome Flurförderzeuge oder durch Menschen im Nachschubprozess platziert, wo sie von dem Manipulator aufgenommen werden.

Dieses manuelle Vorgehen weist Positionierungstoleranzen auf. Insgesamt handelt es sich bei Regalen um ein sehr dynamisches Umfeld, in dem Ladungsträger, Güter oder andere Dinge hineingestellt oder entnommen werden. Auch das Regal selbst ist nicht komplett statisch, da es zu Schwingungen und elastischen Verformungen durch große Massen bzw. Ein- und Ausstapel-Vorgänge kommt. Auch statische Verformungen unter einem gewissen Grenzmaß sind bei Regalen zulässig und führen nicht zu einer Stilllegung des Regals.

Weitere Toleranzen zwischen Flurförderzeugen bzw. deren Manipulatoren und dem Regal entstehen durch Abweichungen in der Lokalisierung des Fahrzeugs, insbesondere in einer Parkposition.

Bekannte Sicherheitssysteme mit ausreichendem Performancelevel zum Personenschutz basieren auf fest einprogrammierten Schutzfeldern. Die Verletzung eines solchen Schutzfeldes, beispielweise durch eine eintretende Person, aber auch durch eine sonstige Störkontur, führt zum sicheren Zustand der Maschine, in der Regel durch Abschalten der Maschine. Diese Schutzfelder müssen a priori festgelegt werden und sind in der Sicherheitssteuerung des Sicherheitssystems fest einprogrammiert. Auf dynamische Umfelder kann damit nur eingeschränkt reagiert werden. Es können zwar Schutzfelder umgeschaltet werden. Allerdings beschränkt sich das auf das Hin- und Herschalten zwischen mehreren fest einprogrammierten Schutzfeldern.

Die Schutzfelder können dabei in einer zweidimensionalen Ebene gebildet werden, beispielsweise durch Laserscanner, oder auch in mehreren parallelen oder sich schneidenden Ebenen. Durch eine Vielzahl solcher Ebenen kann eine räumliche Überwachung gewährleistet werden, in der Menschen sicher ausgeschlossen werden können. Dazu ist es jedoch erforderlich, jede Ebene separat auszuwerten, so dass für jede Ebene ein separater Laserscanner benötigt wird.

Zu Regalen, insbesondere zu Regalstreben und Regalträgern, müssen die Schutzfelder wegen der oben beschriebenen Unsicherheiten einen Abstand halten, weil ein performanter Betrieb eines solchen Systems sonst durch zu viele FehlDetektionen nicht möglich wäre.

Das sichere Detektieren von Ladungsträgern funktioniert mit bekannten Sicherheitssystemen auf Laserscannerbasis noch nicht und auch die Überwachung von Regal-Inhalten ist kaum möglich, da es für eine Palette mit beispielsweise 100 gestapelten Gütern sehr viele Möglichkeiten der Anordnung gibt. Beispielsweise müssten bei einer Kommissionierung von einzelnen Gütern alle Zwischenzustände von voller Palette bis leerer Palette abgebildet werden. Es können hierbei jedoch nicht alle diese Optionen mit fest einprogrammierten Schutzfeldern abgeprüft werden. Dies ist auch deshalb nicht möglich, weil derzeit die Anzahl an vorprogrammierbaren, festen Schutzfeldern in einem handelsüblichen Laserscanner auf maximal 126 Schutzfelder beschränkt ist. Hinzu kommt, dass in den meisten Fällen die Situation auf der Palette durch Bruch oder Schwund nicht systemisch erfasst ist.

Auch im Bereich manuell von einem Fahrer bedienter Fahrzeuge ist häufig die Sicht in ein zu befüllendes oder zu entleerendes Regalfach schlecht. Das gilt insbesondere in großen Hubhöhen, wie sie zum Beispiel bei Schubmaststaplern in engen Gängen auftreten. Hier werden heute meist Kamera-Systeme verwendet, die die Situation im Regalfach darstellen. Damit wird die Verantwortung auf den Fahrer übertragen. Er muss dort sich befindende Personen erkennen und dann entsprechend reagieren.

Die EP 3 511 884 A1 offenbart ein Verfahren und System zur bidirektionalen Kommunikation in der Intralogistik mittels eines Smartgerätes.

Aus der EP 3 772 483 A1 offenbart ein Verfahren zur Ermittlung der Eigenbewegung eines Flurförderzeugs.

Aus der DE 10 2017 209 619 A1 ist ein Verfahren und Steuergerät zum Betreiben eines autonomen Flurförderzeugs bekannt.

Der vorliegenden Erfindung liegt die Aufgabe zugrunde, ein Verfahren der eingangs genannten Art sowie ein intralogistisches System zur Durchführung des Verfahrens so auszugestalten, dass die Sicherheit erhöht wird.

Diese Aufgabe wird verfahrensseitig erfindungsgemäß dadurch gelöst, dass als Sicherheitssystem ein elektronisches Lebewesen-Erkennungssystem verwendet wird, das lebende Objekte detektieren und erkennen kann, wobei das Lebewesen-Erkennungssystem eine Sicherheitsfreigabe für das Flurförderzeug erteilt, falls keine lebenden Objekte im Sicherheitsbereich detektiert und erkannt werden, wobei die Überwachung des Sicherheitsbereichs mittels des Lebewesen-Erkennungssystems vor einem Ein- oder Auslagern von Gütern und/oder Ladungsträgern durch das Flurförderzeug im Sicherheitsbereich durchgeführt. Erst nach der Sicherheitsfreigabe durch das Lebewesen-Erkennungssystem wird dann das Ein- und Auslagern durch das Flurförderzeug durchgeführt..

Der Erfindung liegt dabei die Überlegung zu Grunde, eine Sicherheitsfreigabe für einen 3D-Raum nicht über das Nichtvorhandensein von Störkonturen zu regeln, sondern über das Nichtvorhandensein von lebenden Objekten.

Der zu überwachende Sicherheitsbereich, zum Beispiel ein Regalfach oder ein Ladungsträger, wird erfindungsgemäß vor der Manipulation mit dem erfindungsgemäßen Lebewesen-Erkennungssystem vermessen und damit auf das Nichtvorhandensein von lebenden Objekten überprüft. Das Ein- oder Auslagern von Ladungsträgern im Regal bzw. von Gütern im Regal oder auf Ladungsträgern durch das Flurförderzeug erfolgt erst nach Freigabe durch das Lebewesen-Erkennungssystem. Eine auseichend lange Messdauer garantiert die Detektion auch von verunfallten Personen im zu überwachenden Sicherheitsbereich und somit im Gefahrenbereich. Die Sicherheit einer verunfallten Person ist auch gewährleistet, wenn diese ohnmächtig ist. Es muss ausschließlich eine Mikrozirkulation, beispielsweise durch die Bewegung des Bluts, gegeben sein.

Dabei erkennt das Lebewesen-Erkennungssystem die lebenden Objekte zweckmäßigerweise durch Auswertung von Bewegungen der Objekte.

Besonders bevorzugt erkennt das Lebewesen-Erkennungssystem die lebenden Objekte durch Auswertung von Mikrobewegungen der Objekte, die insbesondere durch Atembewegungen und/oder Herzpulsbewegungen der lebende Objekte entstehen.

Dazu wird zweckmäßigerweise eine Sensorik als Lebewesen-Erkennungssystem eingesetzt, die Mikrobewegungen erkennen kann. Solche Mikrobewegungen entstehen bei lebenden Objekten beispielsweise durch die Atmung oder auch durch den Herzschlag und pulsierendes Blut. Diese Mikrobewegungen bilden eine Bewertungsgrundlage, um unbelebte Materie, beispielsweise Werkstücke, Packstücke, Regale, von lebenden Objekten zu unterscheiden.

Erfindungsgemäß wird also ein komplett anderes Paradigma zur Beurteilung der Sicherheit eines Bereiches angewendet. Es wird nur danach entschieden, ob ein lebendes Objekt (meist ist hier ein Mensch das gesuchte bzw. zu schützende Objekt) sich im Überwachungsbereich befindet. Damit werden gezielt Kollisionen mit anderen Teilen von der Überwachung ausgeschlossen. Die erfindungsgemäße Lösung schützt also nicht vor Kollisionen im Generellen, sondern reduziert Gefahren für Lebewesen, insbesondere Menschen.

Vorteilhafterweise wird ein dreidimensionales Schutzfeld mit einem Sensor des Lebewesen-Erkennungssystems aufgespannt. Dadurch werden Freiheitsgrade in der Manipulation von Objekten mittels mobiler Kommissionierroboter ermöglicht, die mit klassischer Sensorik nur mit großem Aufwand zu realisieren sind.

Gemäß einer besonders bevorzugten Ausgestaltung der Erfindung umfasst das Lebewesen-Erkennungssystem ein Radarsystem, das kontinuierlich ein frequenzmoduliertes Radarsignal sendet und reflektierte Radarsignale empfängt, wobei durch Auswertung von Frequenzprofilen der empfangenen Radarsignale zwischen stationären und bewegten Objekten unterschieden wird.

Das hier beschriebene Radarsystem verwendet also eine bestimmte Radartechnologie, welche in der Lage ist, auch kleinste Bewegungen (Mikrobewegungen) zu erkennen. Mit dem Radarsystem können hierbei lebende Objekte, insbesondere Menschen, mittels Mikro-Doppler und einer Signalprozesseinheit, die beispielsweise künstliche Intelligenz nutzen kann, direkt erkannt und detektiert werden. Die Frequenzen, die das Radar von lebenden Objekten Personen empfängt, beispielsweise Arm-, Körper-, Beinbewegung einer Person, sind so universell, dass aus deren Impulsantworten Rückschluss gezogen werden kann, dass es sich um eine Person handelt.

Das bevorzugt eingesetzte Radarsystem unterscheidet sich dabei prinzipiell von einem herkömmlichen Impuls-Radarsystem. Ein klassischer Impuls-Radar sendet einen kurzen Impuls und bestimmt mit dem entstehenden Echo die Signallaufzeit eines sich in Reichweite befindlichen Objektes. Durch diese Laufzeitmessung lässt sich die Entfernung des Objektes bestimmen, nicht jedoch dessen Geschwindigkeit.

Gemäß der bevorzugten Ausgestaltung der Erfindung wird dagegen ein sogenanntes frequenzmoduliertes Dauerstrichradar-Verfahren (FMCW) eingesetzt. Dabei wird kontinuierlich ein frequenzmoduliertes Signal gesendet. Die Geschwindigkeit von bewegten Objekten kann durch entsprechende Frequenzverschiebungen aufgrund des Dopplereffekts detektiert werden. Die Entfernung wird anhand der Signallaufzeit zwischen gesendetem und empfangenem Signal und der daraus resultierenden Differenzfrequenz bestimmt.

Dieses Dauerstrichradar-Verfahren kann auch zur Detektion der zuvor erwähnten Mikrobewegungen angewendet werden, wie sie durch die Atembewegungen oder den Puls von Lebewesen entstehen.

Mit entsprechenden Analyseverfahren ist es möglich, zwischen stationären, d.h. unbelebten, Objekten und bewegten, d.h. lebenden, Objekten zu unterschieden. Es wird hierzu davon ausgegangen, dass ein Signal, welches von einem stationären Objekt reflektiert wird, über die Zeit konstant bleibt. Ein stationäres Umfeld reflektiert somit ein entsprechendes konstantes Frequenzprofil. Entsprechend reflektiert ein bewegtes Objekt bzw. Umfeld ein nicht konstantes sich veränderndes, abweichendes Frequenzprofil. Somit ist es möglich, das Frequenzprofil von einer stationären Messung von dem Frequenzprofil einer aktuellen Messung zu unterscheiden. Falls es hier zu einer Abweichung zwischen beiden Profilen kommt, ist eine Detektion eines bewegten Objekts gegeben.

Es wird vorteilhafterweise als Sicherheitsbereich ein Bereich in einem Regal, insbesondere in einem leeren Regalfach oder auf einem Ladungsträger, mittels des Lebewesen-Erkennungssystems überwacht.

Solche Bereiche werden bisher in der Regel von keiner Sicherheitssensorik überwacht. Da es sich hier um ein sehr dynamisches Umfeld handelt, ist eine Überwachung mit herkömmlicher Sicherheitssensorik kaum möglich. Mitarbeiter in diesem Umfeld werden in der Regel instruiert und es werden Verbote ausgesprochen, sich in diese Gefahrenbereiche zu begeben, oder diese sicher abzusperren, wenn dort Arbeiten stattfinden müssen. Zusätzlich wird häufig optisch und akustisch durch die in diesem Umfeld operierenden Flurförderzeuge gewarnt.

Typische Gefahrensituationen können in solchen Bereichen durch folgende Gegebenheiten entstehen:
- Arbeiten im Regal
- Regalinspektionen
- Sitzen oder Liegen einer beispielsweise verunfallten Person im Regal
- Sitzen oder Liegen einer Person auf einem Ladungsträger, beispielsweise nach einem Unfall oder bei einer Arbeitspause
- Händische Nacharbeit bei einem Nachschubprozess
- Abfolieren von Paletten beim Nachschubprozess
- Reinigungsarbeiten
- Aufheben heruntergefallener Ware durch manuelle Picker

Bei der Erfindung ist neben der Überwachung des Regalfachs, in dem eine Manipulation durch das Flurförderzeug stattfinden soll, auch eine Überwachung von benachbarten Regalfächern, die daneben, ober- oder unterhalb, bis hin zum Boden, liegen, sinnvoll. Daher ist gemäß einer bevorzugten Ausgestaltung der Erfindung vorgesehen, dass als Sicherheitsbereich benachbarte Regalfächer mittels des Lebewesen-Erkennungssystems überwacht werden. Bei Manipulationen in einer höheren Regalebene kann der gesamte Bereich unterhalb überwacht werden, um die Gefahr durch herunterfallende Güter bzw. Ladungsträger zu minimieren.

Insbesondere bei Palettenregalen, bei denen ein händischer Nachschubprozess durchgeführt wird, bleiben meist auch zwischen dem Fahrzeug und dem Regal oder den Ladungsträgern noch einige Stellen von der klassischen Sicherheitssensorik unüberwacht, da hier die Positionstoleranzen sehr groß sind. Solche Zwischenbereiche sind häufig aufgrund der Toleranzen bei Parkpositionen des Flurförderzeugs und Abstellpositionen der Paletten nicht sehr gut in ihren Formen und Größen vorhersehbar.

Daher ist gemäß einer weiteren bevorzugten Ausgestaltung vorgesehen, dass als Sicherheitsbereich ein Zwischenbereich zwischen dem Flurförderzeug und einem Regal mittels des Lebewesen-Erkennungssystems überwacht wird.

Idealerweise überschneiden sich die Überwachungsbereiche von mehreren, beim Lebewesen-Erkennungssystem eingesetzten, Sensoren, um eine lückenlose Überwachung zu garantieren.

Von Vorteil ist auch eine Überwachung eines Bereiches hinter einem Regal mittels des Lebewesen-Erkennungssystems. Der Detektionsbereich des Lebewesen-Erkennungssystems kann hierzu insbesondere bei Sensoren, die in das Regalfach beispielsweise eines 1200 mm tiefen Palettenregals hinein gerichtet sind, auch noch tiefer eingestellt werden, um auch Personen auf dahinter gelagerten Paletten zu detektieren. Eventuell wird die dahinter stehende Palette gerade vom Nachbargang aus bewirtschaftet.

Die Überwachung ist vor der Manipulation, beispielsweise einem Ein- oder Auslagern von Gütern oder Ladungsträgern mit dem Flurförderzeug, durchzuführen. Während einer Handhabung von Gütern und/oder Ladungsträgern im Sicherheitsbereich durch das Flurförderzeug wird die Überwachung dieses Sicherheitsbereichs mittels des Lebewesen-Erkennungssystems zweckmäßigerweise zumindest teilweise abgeschaltet, da sonst manipulierte Güter oder Ladungsträger oder der Manipulator des Flurförderzeugs selbst zu Fehldetektionen führen.

Dabei wird vorzugsweise mindestens ein weiterer Sicherheitsbereich, in dem keine Handhabung von Gütern und/oder Ladungsträgern durch das Flurförderzeug erfolgt, mittels des Lebewesen-Erkennungssystems überwacht. Somit kann der komplette Bereich um die stattfindende Manipulation beispielsweise durch weitere Radarsensoren abgesichert werden, so dass auch während der Manipulation kein Lebewesen in den Gefahrenbereich kommt.

Sinnvollerweise wird die Überprüfung und der anschließende Manipulationsvorgang durch optische und akustische Warnsignale begleitet, um Personen vor dem Zutritt in den Gefahrenbereich während der Manipulation zu warnen.

Zweckmäßigerweise wird die Überwachung des Sicherheitsbereichs mittels des Lebewesen-Erkennungssystems während einer Fahrt des Flurförderzeugs abgeschaltet. Während der Fahrt des Flurförderzeugs kann das auf Bewegung reagierende Lebewesen-Erkennungssystem prinzipbedingt nicht verwendet werden, so dass dieses während der Fahrt des Flurförderzeugs sinnvollerweise abgeschaltet wird.

Nach dem Stillstand des Flurförderzeugs wird das Lebewesen-Erkennungssystem aktiviert und scannt den vorgesehenen Bereich. Wenn dort keine Bewegungen erkannt werden, erfolgt die Sicherheitsfreigabe. Das Lebewesen-Erkennungssystem wird dann deaktiviert und die Manipulation kann beginnen.

Werden mehrere Sensoren des Lebewesen-Erkennungssystems verwendet, können auch diejenigen Sensoren des Lebewesen-Erkennungssystems, deren Sichtfeld sich nicht in dem Bewegungsraum des Manipulators des Flurförderzeugs oder der manipulierten Güter bzw. Ladungsträger befindet, angeschaltet bleiben und über die komplette Dauer des Manipulationsprozess eine Überwachung gewährleisten.

Gemäß einer bevorzugten Weiterbildung des Erfindungsgedankens wird bei abgeschalteter Überwachung des Sicherheitsbereichs mittels des Lebewesen-Erkennungssystems der durch das Lebewesen-Erkennungssystem nicht überwachte Sicherheitsbereich durch ein vom Lebewesen-Erkennungssystem unabhängiges Sicherheitssystem überwacht. Hierzu kann beispielsweise eine herkömmliche Sicherheitssensorik verwendet werden.

Die Erfindung betrifft ferner ein intralogistisches System, das ein erfindungsgemäßes Verfahren durchführt, mit mindestens einem Sicherheitssystem zur Überwachung mindestens eines Sicherheitsbereichs in einem Umgebungsbereich eines Flurförderzeugs.

Beim intralogistischen System wird die gestellte Aufgabe erfindungsgemäß dadurch gelöst, dass das Sicherheitssystem als elektronisches Lebewesen-Erkennungssystem ausgebildet ist, welches mindestens eine Sensorik umfasst, die dazu eingerichtet ist, lebende Objekte zu detektieren und zu erkennen, und welches mindestens eine, mit der Sensorik in Wirkverbindung stehende, elektronische Steuerungseinrichtung umfasst, die dazu eingerichtet ist, eine Sicherheitsfreigabe für das Flurförderzeug zu erteilen, falls keine lebenden Objekte im Sicherheitsbereich detektiert und erkannt werden.

Es können mehrere Sensoren der Sensorik zu einem System gekoppelt werden, um gemeinsam einen größeren oder komplexer geformten Bereich zu überwachen. Damit können auch Schatten, beispielsweise von Regalpfosten, von einzelnen Sensoren eingesehen werden.

In einer besonders bevorzugten Ausgestaltung der Erfindung umfasst das Lebewesen-Erkennungssystem ein Radarsystem, das dazu ausgebildet ist, kontinuierlich ein frequenzmoduliertes Radarsignal zu senden und reflektierte Radarsignale zu empfangen und durch Auswertung von Frequenzprofilen der empfangenen Radarsignale zwischen stationären und bewegten Objekten zu unterscheiden und die lebenden Objekte durch Auswertung der Bewegungen der Objekte zu erkennen.

Zweckmäßigerweise ist die Sensorik am Flurförderzeug angebracht. Dabei kann die Sensorik zum Beispiel bei quer zur Fahrtrichtung arbeitenden Flurförderzeugen vorne und hinten fest am Fahrzeug angebaut sein. Bei in Fahrtrichtung arbeitenden Fahrzeugen, insbesondere bei Flurförderzeugen mit Gabelzinken, kann die Sensorik zur Seite hin ausgerichtet sein.

Mit besonderem Vorteil ist die Sensorik an einer Lasthandhabungseinrichtung, zum Beispiel an einem Manipulatorarm, des Flurförderzeugs angebracht. Dies ermöglicht das Ausrichten des Sensors und des Sichtfeldes in eine Scanposition, um den Überwachungsbereich voll im Blick zu haben. Bei Flurförderzeugen mit Gabelzinken, zum Beispiel Schubmaststaplern oder Gegengewichtsstaplern, kann die Sensorik am Gabelrücken oder unterhalb der Zinken oder am Gabelträger angeordnet sein. Bei Flurförderzeugen mit robotischen Kinematiken, beispielsweise Manipulatoren oder Roboterarmen mit einem Greifer, ist die Sensorik zweckmäßigerweise in der Nähe des Greifers angeordnet.

Zusätzlich oder alternativ kann die Sensorik auch außerhalb des Flurförderzeugs, insbesondere im Bereich eines Regals oder einer sonstigen Infrastruktur des intralogistischen Systems, angebracht sein. Der Überwachungsvorgang wird dann nach Stillstand durch das Flurförderzeug getriggert und die Manipulation startet erst nach der Sicherheitsfreigabe. In diesem Fall ist auf eine Datenübermittlung mit geeignetem Performance Level zu achten.

Außer an Regalen kann die Erfindung zum Beispiel auch bei Übergabestationen verwendet werden.

Insgesamt eignet sich die Erfindung für eine ganze Reihe von Anwendungsfällen. Beispielhaft seien folgende Anwendungen erwähnt:
- Einstapeln oder Nachschub von Paletten oder Groß-Ladungsträgern (z.B. Gitterboxen) beispielsweise durch autonome Schubmaststapler:
   Eine unachtsame oder bewegungsunfähige Person könnte sich auf dem Platz im Regal oder in dem Bereich zwischen Fahrzeug und Palette bzw. Regal befinden. Die Person könnte auch durch die Palette verletzt werden.
- Ausstapeln von Paletten beispielsweise durch autonome Schubmaststapler:
   Eine Person könnte sich auf der Palette oder in dem Bereich zwischen Fahrzeug und Palette bzw. Regal befinden. Eventuell besteht keine unmittelbare Gefahr bei der Aufnahme, aber danach während des Verfahrens der Palette.
- Ablage oder Aufnahme von Gütern oder Paketen oder Einzelteilen aus der Palette oder dem Groß-Ladungsträger, beispielsweise mit mobilen Kommissionierrobotern:
   Eine Person kann sich auf der Palette im Regal oder in dem Bereich zwischen Fahrzeug und Palette bzw. Regal befinden. Eventuell ist kein Fluchtweg vorhanden, wenn daneben und dahinter alle Palettenplätze voll sind. Die Person kann auch durch den Manipulator bzw. Roboterarm des Kommissionierroboters verletzt werden.
- Ablage oder Aufnahme von Gütern oder Paketen oder Einzelteilen aus einem Fachbodenregal oder Durchlaufregal, beispielsweise mit mobilen Kommissionierrobotern:
   Eine Person kann sich im Regal oder in dem Bereich zwischen Fahrzeug und Palette bzw. Regal befinden. Die Person kann durch den Manipulator bzw. Roboterarm des Kommissionierroboters verletzt werden.
- Manuelles Ein- oder Ausstapeln von Paletten in ein Regal bzw. aus einem Regal beispielsweise durch einen manuellen Schubmaststapler:
   Eine Person kann sich im Regal oder in dem Bereich zwischen Fahrzeug und Palette bzw. Regal befinden.
- Blocklager, manuell betriebenes oder autonomes Flurförderzeug:
   Beim Einsatz eines manuell betriebenen oder autonomen und somit robotisch betriebenen Flurförderzeugs kann verhindert werden, dass Personen durch das Abstellen von Ladungsträgern/Paletten eingesperrt werden.
- LKB Be- und Entladung mit manuell betriebenem oder autonomem Flurförderzeug:
   Beim Beladen und Entladen eines LKW mit einem manuell betriebenen oder autonomen und somit robotisch betriebenen Flurförderzeugs könnte eine Person zwischen Ladungsträger/Palette und Ladebordwand des LKW sein.

### Mit der Erfindung sind zahlreiche Vorteile verbunden:

Es können 3D-Räume auch in sehr dynamischen Umfeldern sicher überwacht werden, weil die Sensorik nur nach bewegten Objekten sucht. Die statische Szenerie wird ausgeblendet.

Der Installations- und Inbetriebnahmeaufwand für Multi-Sensor-Systeme, bestehend aus klassischer Ein-Ebenen-Sicherheitssensorik entfällt.

Personen und Tiere können sicher erkannt werden. Selbst Mikrobewegungen aus Atmung oder Puls sind dafür ausreichend.

Außerdem ergeben sich Kosteneinsparungen durch das Aufspannen eines dreidimensionalen Schutzfeldes mit einem Sensor.

Auch pro Sensor ergibt sich eine Kostensenkung im Vergleich zu einem Lasersensor.

Weitere Vorteile und Einzelheiten der Erfindung werden anhand der in den schematischen Figuren dargestellten Ausführungsbeispiele näher erläutert. Hierbei zeigen
- Figur 1: ein erfindungsgemäßes Sicherheitssystem eines autonomen Flurförderzeugs im Stillstand,
- Figur 2: ein erfindungsgemäßes Sicherheitssystem eines autonomen Flurförderzeugs in Bereitschaft,
- Figur 3: ein erfindungsgemäßes Sicherheitssystem eines autonomen Flurförderzeugs vor der Manipulation und
- Figur 4: ein erfindungsgemäßes Sicherheitssystem eines autonomen Flurförderzeugs bei der Manipulation.

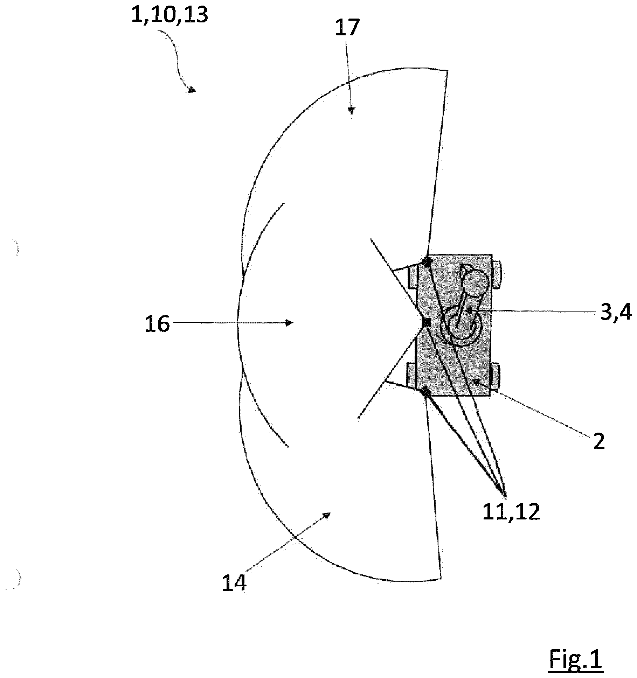

Die Figuren 1 bis 4 zeigen das erfindungsgemäße Sicherheitssystem 1 eines autonomen Flurförderzeugs 2 in verschiedenen Betriebsphasen.

Das Flurförderzeug 2 ist im dargestellten Ausführungsbeispiel als mobiler, autonomer Kommissionierroboter ausgebildet, der über eine, als Roboterarm 4 ausgebildete, Lasthandhabungseinrichtung 3 verfügt, mit der Güter 5, zum Beispiel Pakete 6, auf einen Ladungsträger 7, zum Beispiel eine Palette 8 abgelegt oder von dieser entnommen werden können. Der Ladungsträger 7 befindet sich in einem Regal 9.

Das Sicherheitssystem 1 ist als Lebewesen-Erkennungssystem 10 ausgebildet. Das Lebewesen-Erkennungssystem 10 wird durch ein Radarsystem 13 realisiert. Es verfügt über eine Sensorik 11, die im dargestellten Ausführungsbeispiel aus mehreren Radarsensoren 12 besteht. Diese Radarsensoren 12 spannen jeweils einen kegelförmigen 3D-Raum auf, welcher dem jeweils überwachten Sicherheitsbereich 14, 16, 17 entspricht. Da das Radarsystem 13 auf Mikrobewegungen und somit kleinste Bewegungen in den Sicherheitsbereichen 14, 16, 17 reagiert und diese erkennt, muss das Flurförderzeug 2 vollständig stillstehen, bevor das Radarsystem 13 aktiviert wird.

Die Figur 1 zeigt das Flurförderzeug 2 mit aktiviertem Radarsystem 13 im Stillstand.

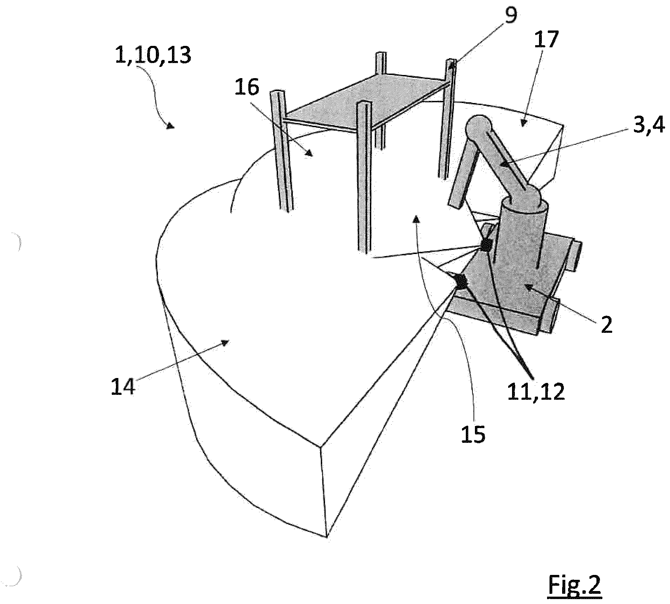

Wie in der Figur 2 zu sehen ist, positioniert sich das Flurförderzeug 2 an eine entsprechende Entnahmestation 15 vor einem Regal 9. Nach dem Stillstand des Flurförderzeugs 2 wird das Radarsystem 13 aktiviert und dadurch der gesamte Bereich der Entnahmestation 15 mit den Sicherheitsbereichen 14, 16, 17 überwacht. Sobald der mittlere Sicherheitsbereich 16 der Entnahmestation 15 eine bestimmte Zeit überwacht wurde und keine Mikrobewegungen in dem Sicherheitsbereich 16 erkannt wurden, kann davon ausgegangen werden, dass sich hier keine Person befindet. Damit der Roboterarm 4 nun in diesem Sicherheitsbereich 16 agieren kann, wird eine Sicherheitsfreigabe für das Flurförderzeug 2 erteilt und in dem Sicherheitsbereich 16 die Überwachung deaktiviert.

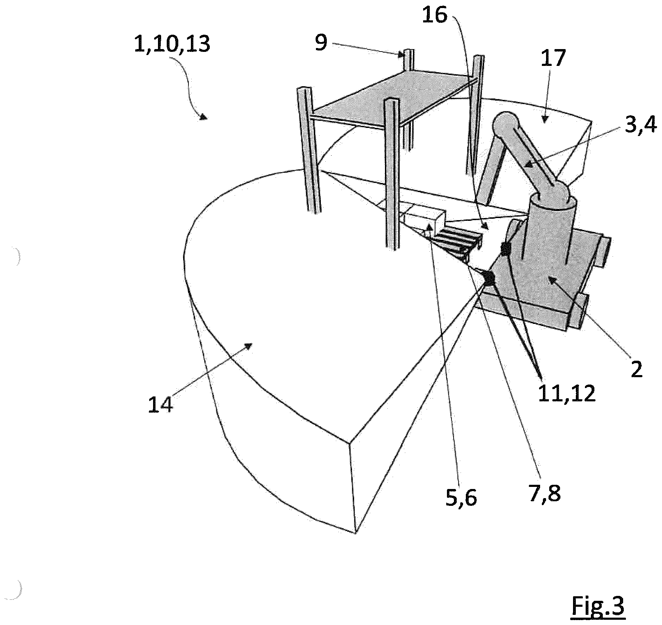

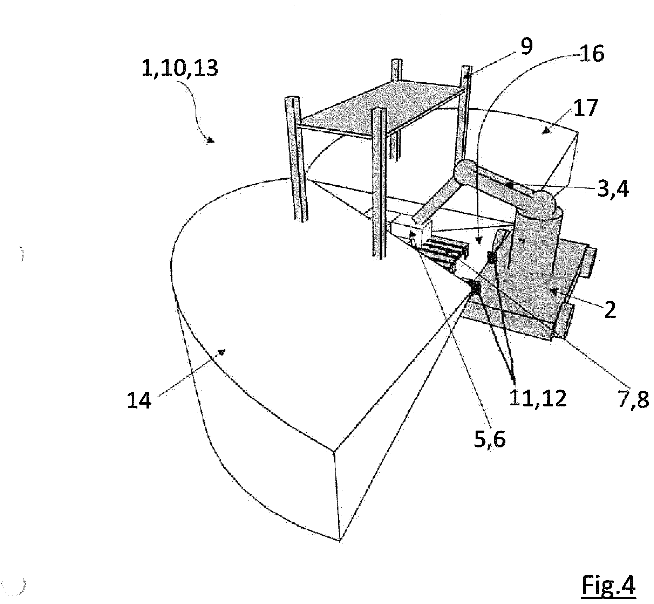

Die Figuren 3 und 4 zeigen das Sicherheitssystem 1 mit deaktivierter Überwachung des mittleren Sicherheitsbereichs 16. Die seitlichen Radarsensoren 12 mit den Sicherheitsbereichen 14, 17 sind zwecks Überwachung eines seitlichen Eintrittes von Personen weiterhin aktiv.

Wie in der Figur 4 dargestellt, kann bei deaktivierter Überwachung des mittleren Sicherheitsbereichs 16 nun der Roboterarm 4 sicher in den mittleren Sicherheitsbereich 16 bewegt werden, um die Güter 5, insbesondere Pakete 6, vom Ladungsträger 7, insbesondere von der Palette 8, aus dem Regal 9 zu entnehmen oder auf den Ladungsträger 7 abzulegen.

## Patentansprüche

1. Verfahren zum Betreiben eines Flurförderzeugs (2) in einem intralogistischen System, wobei mittels mindestens eines Sicherheitssystems (1) eine Überwachung mindestens eines Sicherheitsbereichs (14, 16, 17) in einem Umgebungsbereich des Flurförderzeugs (2) durchgeführt wird, **dadurch gekennzeichnet, dass** als Sicherheitssystem (1) ein elektronisches Lebewesen-Erkennungssystem (10) verwendet wird, das lebende Objekte detektieren und erkennen kann, wobei das Lebewesen-Erkennungssystem (10) eine Sicherheitsfreigabe für das Flurförderzeug (2) erteilt, falls keine lebenden Objekte im Sicherheitsbereich (14, 16, 17) detektiert und erkannt werden, wobei die Überwachung des Sicherheitsbereichs (14, 16, 17) mittels des Lebewesen-Erkennungssystems (10) vor einem Ein- oder Auslagern von Gütern (5) und/oder Ladungsträgern (7) im Sicherheitsbereich (14, 16, 17) durchgeführt wird, und das Ein- und Auslagern erst nach der Sicherheitsfreigabe durch das Lebewesen-Erkennungssystem (10) durchgeführt wird.

2. Verfahren nach Anspruch 1, **dadurch gekennzeichnet, dass** das Lebewesen-Erkennungssystem (10) die lebenden Objekte durch Auswertung von Bewegungen der Objekte erkennt.

3. Verfahren nach Anspruch 2, **dadurch gekennzeichnet, dass** das Lebewesen-Erkennungssystem (10) die lebenden Objekte durch Auswertung von Mikrobewegungen der Objekte, die insbesondere durch Atembewegungen und/oder Herzpulsbewegungen der lebende Objekte entstehen, erkennt.

4. Verfahren Anspruch 2 oder 3, **dadurch gekennzeichnet, dass** das Lebewesen-Erkennungssystem (10) ein Radarsystem (13) umfasst, das kontinuierlich ein frequenzmoduliertes Radarsignal sendet und reflektierte Radarsignale empfängt, wobei durch Auswertung von Frequenzprofilen der empfangenen Radarsignale zwischen stationären und bewegten Objekten unterschieden wird.

5. Verfahren nach einem der Ansprüche 1 bis 4, **dadurch gekennzeichnet, dass** als Sicherheitsbereich (14, 16, 17) ein Bereich in einem Regal (9), insbesondere in einem leeren Regalfach oder auf einem Ladungsträger (7), mittels des Lebewesen-Erkennungssystems (10) überwacht wird.

6. Verfahren nach einem der Ansprüche 1 bis 5, **dadurch gekennzeichnet, dass** als Sicherheitsbereich (14, 16, 17) benachbarte Regalfächer mittels des Lebewesen-Erkennungssystems (10) überwacht werden.

7. Verfahren nach einem der Ansprüche 1 bis 6, **dadurch gekennzeichnet, dass** als Sicherheitsbereich (14, 16, 17) ein Zwischenbereich zwischen dem Flurförderzeug (2) und einem Regal (9) mittels des Lebewesen-Erkennungssystems (10) überwacht wird.

8. Verfahren nach einem der Ansprüche 1 bis 7, **dadurch gekennzeichnet, dass** als Sicherheitsbereich (14, 16, 17) ein Bereich hinter einem Regal (9) mittels des Lebewesen-Erkennungssystems (10) überwacht wird.

9. Verfahren nach einem der Ansprüche 1 bis 8, **dadurch gekennzeichnet, dass** während einer Handhabung von Gütern (5) und/oder Ladungsträgern (7) durch das Flurförderzeug (2) im Sicherheitsbereich (14, 16, 17) die Überwachung dieses Sicherheitsbereichs (14, 16, 17) mittels des Lebewesen-Erkennungssystems (10) zumindest teilweise abgeschaltet wird.

10. Verfahren nach Anspruch 9, **dadurch gekennzeichnet, dass** mindestens ein weiterer Sicherheitsbereich (14, 16, 17), in dem keine Handhabung von Gütern (5) und/oder Ladungsträgern (7) durch das Flurförderzeug (2) erfolgt, mittels des Lebewesen-Erkennungssystems (10) überwacht wird.

11. Verfahren nach einem der Ansprüche 1 bis 9, **dadurch gekennzeichnet, dass** die Überwachung des Sicherheitsbereichs (14, 16, 17) mittels des Lebewesen-Erkennungssystems (10) während einer Fahrt des Flurförderzeugs (2) abgeschaltet wird.

12. Verfahren nach einem der Ansprüche 9 bis 11, **dadurch gekennzeichnet, dass** bei abgeschalteter Überwachung des Sicherheitsbereichs (14, 16, 17) mittels des Lebewesen-Erkennungssystems (10) der durch das Lebewesen-Erkennungssystem (10) nicht überwachte Sicherheitsbereich (14, 16, 17) durch ein vom Lebewesen-Erkennungssystem (10) unabhängiges Sicherheitssystem überwacht wird.

13. Intralogistisches System, das ein Verfahren nach einem der Ansprüche 1 bis 12 durchführt, mit mindestens einem Sicherheitssystem (1) zur Überwachung mindestens eines Sicherheitsbereichs (14, 16, 17) in einem Umgebungsbereich eines Flurförderzeugs (2), **dadurch gekennzeichnet, dass** das Sicherheitssystem (1) als elektronisches Lebewesen-Erkennungssystem (10) ausgebildet ist, welches mindestens eine Sensorik (11) umfasst, die dazu eingerichtet ist, lebende Objekte zu detektieren und zu erkennen, und welches mindestens eine, mit der Sensorik in Wirkverbindung stehende, elektronische Steuerungseinrichtung umfasst, die dazu eingerichtet ist, eine Sicherheitsfreigabe für das Flurförderzeug (2) zu erteilen, falls keine lebenden Objekte im Sicherheitsbereich (14, 16, 17) detektiert und erkannt werder, wobei die Überwachung des Sicherheitsbereichs mittels des Lebewesen-Erkennungssystems vor einem Ein- oder Auslagern von Gütern und/oder Ladungsträgern im Sicherheitsbereich durchgeführt wird, und das Ein- und Auslagern erst nach der Sicherheitsfreigabe durch das Lebewesen-Erkennungssystem durchgeführt wird.

14. Intralogistisches System nach Anspruch 13, **dadurch gekennzeichnet, dass** das Lebewesen-Erkennungssystem (10) ein Radarsystem (13) umfasst, das dazu ausgebildet ist, kontinuierlich ein frequenzmoduliertes Radarsignal zu senden und reflektierte Radarsignale zu empfangen und durch Auswertung von Frequenzprofilen der empfangenen Radarsignale zwischen stationären und bewegten Objekten zu unterscheiden und die lebenden Objekte durch Auswertung der Bewegungen der Objekte zu erkennen.

15. Intralogistisches System nach Anspruch 13 oder 14, **dadurch gekennzeichnet, dass** die Sensorik (11) am Flurförderzeug (2) angebracht ist.

16. Intralogistisches System nach Anspruch 15, **dadurch gekennzeichnet, dass** die Sensorik (11) an einer Lasthandhabungseinrichtung (3) des Flurförderzeugs (2) angebracht ist.

17. Intralogistisches System nach einem der Ansprüche 13 bis 16, **dadurch gekennzeichnet, dass** die Sensorik (11) außerhalb des Flurförderzeugs (2), insbesondere im Bereich eines Regals (9), angebracht ist.

## Claims

1. Method for operating a floor conveyor (2) in an intralogistics system, wherein monitoring of at least one safety region (14, 16, 17) in a surrounding region of the floor conveyor (2) is performed by means of at least one safety system (1), **characterized in that** an electronic living being recognition system (10) is used as a safety system (1) which can detect and recognize living objects, wherein the living being recognition system (10) authorizes safe release of the floor conveyor (2) if no living objects are detected and recognized in the safety region (14, 16, 17), wherein the monitoring of the safety region (14, 16, 17) by means of the living being recognition system (10) is performed before goods (5) and/or load carriers (7) are entered into or removed from storage in the safety region (14, 16, 17), and the entering into and removal from storage are performed only after the safe release by the living being recognition system (10).

2. Method according to Claim 1, **characterized in that** the living being recognition system (10) recognizes the living objects by analysing movements of the objects.

3. Method according to Claim 2, **characterized in that** the living being recognition system (10) recognizes the living objects by analysing micromovements of the objects which are caused in particular by breathing movements and/or heart pulse movements of the living objects.

4. Method according to Claim 2 or 3, **characterized in that** the living being recognition system (10) comprises a radar system (13) which continually emits a frequency-modulated radar signal and receives reflected radar signals, wherein a distinction is made between stationary and moving objects by analysing frequency profiles of the received radar signals.

5. Method according to one of Claims 1 to 4, **characterized in that** a region in a shelf (9), in particular in an empty shelving bay or on a load carrier (7) is monitored by means of the living being recognition system (10) as the safety region (14, 16, 17).

6. Method according to one of Claims 1 to 5, **characterized in that** adjacent shelving bays are monitored by means of the living being recognition system (10) as the safety region (14, 16, 17).

7. Method according to one of Claims 1 to 6, **characterized in that** an intermediate region between the floor conveyor (2) and a shelf (9) is monitored by means of the living being recognition system (10) as the safety region (14, 16, 17).

8. Method according to one of Claims 1 to 7, **characterized in that** a region behind a shelf (9) is monitored by means of the living being recognition system (10) as the safety region (14, 16, 17) .

9. Method according to one of Claims 1 to 8, **characterized in that** the monitoring of the safety region (14, 16, 17) is at least partially switched off by means of the living being recognition system (10) during handling of goods (5) and/or load carriers (7) by the floor conveyor (2) in this safety region (14, 16, 17).

10. Method according to Claim 9, **characterized in that** a further safety region (14, 16, 17) in which no handling of goods (5) and/or load carriers (7) is effected by the floor conveyor (2) is monitored by means of the living being recognition system (10).

11. Method according to one of Claims 1 to 9, **characterized in that** the monitoring of the safety region (14, 16, 17) is switched off by means of the living being recognition system (10) during travel of the floor conveyor (2).

12. Method according to one of Claims 9 to 11, **characterized in that**, when the monitoring of the safety region (14, 16, 17) by means of the living being recognition system (10) has been switched off, the safety region (14, 16, 17) not monitored by the living being recognition system (10) is monitored by a safety system independent of the living being recognition system (10).

13. Intralogistics system which performs a method according to one of Claims 1 to 12, with at least one safety system (1) for monitoring at least one safety region (14, 16, 17) in a surrounding region of a floor conveyor (2), **characterized in that** the safety system (1) is configured as an electronic living being recognition system (10) which comprises at least one sensor system (11) which is designed to detect and recognize living objects and which comprises at least one electronic control device which is actively connected to the sensor system and is designed to authorize the safe release of the floor conveyor (2) if no living objects are detected and recognized in the safety region (14, 16, 17), wherein the monitoring of the safety region by means of the living being recognition system is performed before goods and/or load carriers are entered into or removed from storage in the safety region, and the entering into and removal from storage are performed only after the safe release by the living being recognition system.

14. Intralogistics system according to Claim 13, **characterized in that** the living being recognition system (10) comprises a radar system (13) which is configured to continually emit a frequency-modulated radar signal and receive reflected radar signals and to make a distinction between stationary and moving objects by analysing frequency profiles of the received radar signals and to recognize the living objects by analysing the movements of the objects.

15. Intralogistics system according to Claim 13 or 14, **characterized in that** the sensor system (11) is attached to the floor conveyor (2).

16. Intralogistics system according to Claim 15, **characterized in that** the sensor system (11) is attached to a load handling device (3) of the floor conveyor (2).

17. Intralogistics system according to one of Claims 13 to 16, **characterized in that** the sensor system (11) is attached outside the floor conveyor (2), in particular in the region of a shelf (9).

## Revendications

1. Procédé de fonctionnement d'un convoyeur au sol (2) dans un système intralogistique, une surveillance d'au moins une zone de sécurité (14, 16, 17) étant effectuée dans une zone d'environnement du convoyeur au sol (2) au moyen au moins d'un système de sécurité (1), **caractérisé en ce qu'**un système électronique de détection d'êtres vivants (10), qui peut détecter et reconnaître des objets vivants, est utilisé comme système de sécurité (1), le système de reconnaissance d'êtres vivants (10) intimant un déverrouillage de la sécurité du convoyeur au sol (2) si aucun objet vivant n'est détecté et reconnu dans la zone de sécurité (14, 16, 17), la surveillance de la zone de sécurité (14, 16, 17) étant effectuée au moyen du système de reconnaissance d'êtres vivants (10) avant le stockage ou déstockage des marchandises (5) et/ou des supports de charges (7) dans la zone de sécurité (14, 16, 17), et le stockage et le déstockage n'étant effectués qu'après déverrouillage de la sécurité par le système de reconnaissance d'êtres vivants (10).

2. Procédé selon la revendication 1, **caractérisé en ce que** le système de reconnaissance d'êtres vivants (10) reconnaît les objets vivants en évaluant les mouvements des objets.

3. Procédé selon la revendication 2, **caractérisé en ce que** le système de reconnaissance d'êtres vivants (10) reconnaît les objets vivants en évaluant des micromouvements des objets qui proviennent notamment des mouvements respiratoires et/ou des mouvements du pouls cardiaque des objets vivants.

4. Procédé selon la revendication 2 ou 3, **caractérisé en ce que** le système de reconnaissance d'êtres vivants (10) comprend un système radar (13) qui émet en continu un signal radar modulé en fréquence et qui reçoit des signaux radar réfléchis, une distinction étant faite entre des objets fixes et des objets en mouvement en évaluant les profils de fréquence des signaux radar reçus.

5. Procédé selon l'une des revendications 1 à 4, **caractérisé en ce que** la zone de sécurité (14, 16, 17) qui est surveillée au moyen du système de reconnaissance d'êtres vivants (10) est une zone qui est située dans un rayonnage (9), notamment dans un compartiment de rayonnage vide ou sur un support de charges (7).

6. Procédé selon l'une des revendications 1 à 5, **caractérisé en ce que** la zone de sécurité (14, 16, 17) qui est surveillée au moyen du système de détection d'êtres vivants (10) est formée par des compartiments de rayonnage adjacents.

7. Procédé selon l'une des revendications 1 à 6, **caractérisé en ce que** la zone de sécurité (14, 16, 17) qui est surveillée au moyen du système de reconnaissance d'êtres vivants (10) est une zone intermédiaire située entre le convoyeur au sol (2) et un rayonnage (9).

8. Procédé selon l'une des revendications 1 à 7, **caractérisé en ce que** la zone de sécurité (14, 16, 17) qui est surveillée au moyen du système de reconnaissance d'êtres vivants (10) est une zone située derrière un rayonnage (9).

9. Procédé selon l'une des revendications 1 à 8, **caractérisé en ce que**, pendant la manutention des marchandises (5) et/ou des supports de charges (7) par le convoyeur au sol (2) dans la zone de sécurité (14, 16, 17), la surveillance de cette zone de sécurité (14, 16, 17) est au moins partiellement désactivée au moyen du système de reconnaissance d'êtres vivants (10).

10. Procédé selon la revendication 9, **caractérisé en ce qu'**au moins une autre zone de sécurité (14, 16, 17), dans laquelle aucune manipulation de marchandises (5) et/ou de supports de charges (7) n'est effectuée par le convoyeur au sol (2), est surveillée au moyen du système de reconnaissance d'êtres vivants (10).

11. Procédé selon l'une des revendications 1 à 9, **caractérisé en ce que** la surveillance de la zone de sécurité (14, 16, 17) est désactivée au moyen du système de reconnaissance d'êtres vivants (10) pendant que le convoyeur au sol (2) se déplace.

12. Procédé selon l'une des revendications 9 à 11, **caractérisé en ce que**, lorsque la surveillance de la zone de sécurité (14, 16, 17) au moyen du système de détection d'êtres vivants (10) est désactivée, la zone de sécurité (14, 16, 17) qui n'est pas surveillée par le système de reconnaissance d'êtres vivants (10), est surveillée par un système de sécurité indépendant du système de reconnaissance d'êtres vivants (10).

13. Système intralogistique, qui met en œuvre un procédé selon l'une des revendications 1 à 12, comprenant au moins un système de sécurité (1) destiné à surveiller au moins une zone de sécurité (14, 16, 17) située dans une zone d'environnement d'un convoyeur au sol (2), **caractérisé en ce que** le système de sécurité (1) est conçu comme un système électronique de reconnaissance d'êtres vivants (10) qui comprend au moins un ensemble de capteurs (11) conçu pour détecter et reconnaître des objets vivants et qui comprend au moins un dispositif de commande électronique qui est relié fonctionnellement au système de capteurs et qui est conçu pour intimer un déverrouillage de la sécurité du convoyeur au sol (2) si aucun objet vivant n'est détecté et reconnu dans la zone de sécurité (14, 16, 17), la surveillance de la zone de sécurité étant effectuée au moyen du système de reconnaissance d'êtres vivants avant le stockage ou le déstockage de marchandises et/ou de supports de charges dans la zone de sécurité, et le stockage et le déstockage n'étant effectués qu'après le déverrouillage de la sécurité par le système de reconnaissance d'êtres vivants.

14. Système intralogistique selon la revendication 13, **caractérisé en ce que** le système de reconnaissance d'êtres vivants (10) comprend un système radar (13) qui est conçu pour émettre en continu un signal radar modulé en fréquence et pour recevoir des signaux radar réfléchis et pour faire une distinction entre des objets stationnaires et des objets en mouvement en évaluant des profils de fréquence des signaux radar reçus et pour reconnaître les objets vivants en évaluant les mouvements des objets.

15. Système intralogistique selon la revendication 13 ou 14, **caractérisé en ce que** le système de capteurs (11) est fixé au convoyeur au sol (2).

16. Système intralogistique selon la revendication 15, **caractérisé en ce que** l'ensemble de capteurs (11) est fixé à un dispositif de manutention de charges (3) du convoyeur au sol (2).

17. Système intralogistique selon l'une des revendications 13 à 16, **caractérisé en ce que** l'ensemble de capteurs (11) est fixé à l'extérieur du convoyeur au sol (2), notamment au niveau d'un rayonnage (9).
